## Europäisches Patentamt

## European Patent Office

## Office européen des brevets

(19)

(11) Veröffentlichungsnummer: **0 011 329**
**A1**

(12) **EUROPÄISCHE PATENTANMELDUNG**

(21) Anmeldenummer: **79200629.8**

(22) Anmeldetag: **29.10.79**

(51) Int. Cl.³: **F 17 D 5/02**
**G 01 M 3/28, F 23 K 5/00**

(30) Priorität: **08.11.78 CH 11466/78**

(43) Veröffentlichungstag der Anmeldung:
**28.05.80 Patentblatt 80/11**

(84) Benannte Vertragsstaaten:
**AT DE FR GB IT NL SE**

(71) Anmelder: **Meyer, Ulrich**
**Paradiesweg 781**
**CH-5702 Niederlenz(CH)**

(72) Erfinder: **Meyer, Ulrich**
**Paradiesweg 781**
**CH-5702 Niederlenz(CH)**

(74) Vertreter: **Winkler, Kurt, Dr.**
**Mellingerstrasse 69**
**CH-5400 Baden(CH)**

(54) **Lecksicherungsverfahren zur Überwachung einer Rohrleitung und Einrichtung zur Durchführung des Verfahrens.**

(57) Mit der vorliegenden Erfindung soll ein Lecksicherungsverfahren geschaffen werden, welches im Stande ist, Rohrleitungen bei gleichmässigen oder stark unterschiedlichen Durchflussmengen zuverlässig gegen Leckverluste zu überwachen. Dabei sollen flüssige und gasförmige Medien in Leitungen jeder Grösse, bei kleinsten, wie auch bei grössten Durchflussmengen ungeachtet der Anzahl von Zapfstellen erfasst werden können. Bei Undichtigkeit soll der Zufluss automatisch sofort unterbrochen und nur willkürlich wieder in Betrieb gesetzt werden können.

Die Erfindung ist dadurch gekennzeichnet, dass der Leitungsinhalt durch eine eingangs in die zu überwachende Leitung eingebaute Durchfluss-Intervallvorrichtung (1) in einen pulsartigen Fluss versetzt wird, ein ausgangs der zu überwachenden Leitung montiertes Druckhalteventil (2) aber ein konstanter Mindestdruck in derselben gewährleistet und durch eine in die zu überwachende Leitung eingebaute Druckkontrolleinrichtung (3), welche während jeder intervallmässig immer wiederkehrenden Ruhezustandsphase des Durchflusses den Leitungsinhalt auf Druckabfall hin überprüft, zum Zwecke, bei einem leckbedingten Druckabfall sofort den Durchfluss zu unterbrechen.

Die Durchfluss-Intervallvorrichtung (1) kann aus einem, durch einen "Timer" gesteuertem Elektroventil oder einem motorisch angetriebenen, zwangsgesteuertem mechanischen Ventil bestehen. Als Druckkontroll- und Verschlussorgan kann ein Pressostat (3), ein Kolbenventil (Fig. 6) oder ein Membranenventil (Fig. 7) dienen. Zur Wiederherstellung des gleichmässigen Flusses kann ein Druckausgleichsgefäss (22) mit Druckreduzierventil (23) dem Druckhalteventil (2) nachgeschaltet werden.

Fig. 1

Lecksicherungsverfahren zur Überwachung einer Rohrleitung und Einrichtung zur Durchführung des Verfahrens.

Die Erfindung betrifft ein Lecksicherungsverfahren zur Überwachung einer Rohrleitung, die ein flüssiges oder gasförmiges Medium führt, sowie eine Einrichtung zur Durchführung des Verfahrens.

Überall stehen Rohrleitungen und Leitungsnetze mit gefährdendem Inhalt im Einsatz. Dabei geschehen immer wieder Unfälle, bei welchen die Umwelt verschmutzt, Sachwerte schwer geschädigt werden und selbst Verluste an Menschenleben zu beklagen sind.

Da sehr viele Leitungen - Leitungsnetze praktisch immer - einen unregelmässigen oder stark ändernden Durchfluss aufweisen, war eine exakte Erfassung von Leckstellen und deren automatische Auswertung bisher in der Praxis nicht möglich.

Der vorliegenden Erfindung liegt die Aufgabe zugrunde, ein Lecksicherungsverfahren zu schaffen, welches imstande ist, Rohrleitungen mit gleichmässigem oder änderndem Durchfluss zuverlässig auf Leckverluste zu überwachen. Das Verfahren muss für flüssige und gasförmige Medien, für Leitungsnetze sowie für Leitungen jeder Grösse, bei kleinen wie auch bei grossen Durchflussmengen und ungeachtet der Anzahl der Zapfstellen anwendbar sein. Bei einer auftretenden Undichtheit in der Leitung muss der Durchfluss sofort gesperrt werden.

Die erfindungsgemässe Lösung dieser Aufgabe besteht darin, dass die Förderung des Mediums durch die Rohrleitung pulsierend erfolgt und bei einem leckbedingten Druckabfall, welcher zur Unterschreitung eines einstellbaren Minimaldruckes in der Leitung während einer der intervallmässig immer wiederkehrenden Stillstandsphasen führt, der Durchfluss durch die Leitung sofort gesperrt wird.

Eine Einrichtung zur Durchführung dieses Verfahrens ist gekennzeichnet durch eine eingangs der zu überwachenden Rohrleitung eingebaute Intervalldurchfluss-Vorrichtung, welche eine pulsierende Strömung durch die Leitung bewirkt, durch ein ausgangs der Leitung angeordnetes Druckhalteventil, welches einen einstellbaren Minimaldruck in der intakten Leitung gewährleistet, und durch eine Druckkontrollvorrichtung, welche bei Unterschreitung des eingestellten Minimaldruckes eine Sperrung des Durchflusses durch die Leitung bewirkt.

Durch eine solche Einrichtung werden allfällige Leckstellen in einer Rohrleitung raschest festgestellt und der Durchfluss durch dieselbe wird automatisch gesperrt. Damit ist dem Bedienungspersonal die Möglichkeit gegeben, die Rohrleitung - und selbstverständlich auch die mit ihr verbundenen Armaturen - zu untersuchen, bis die Leckstelle aufgefunden ist und behoben werden kann. Ferner ist es möglich, bei langen Leitungen oder vielen Zapfstellen durch Unterteilung des Stranges in mehrere, einzeln überwachte Abschnitte die Revisionsarbeiten zu beschleunigen.

In der Zeichnung sind Ausführungsbeispiele der Erfindung dargestellt, die nachstehend näher beschrieben werden. Es zeigen:

Fig.1-3 verschiedene Schaltungsschemata,
Fig.4 ein Intervalldurchflussventil im Schnitt,
Fig.5 ein Druckkontrollventil mit Arbeitskolben im

0011329

Schnitt,
Fig.6 ein Druckkontrollventil mit Membrane im Schnitt.

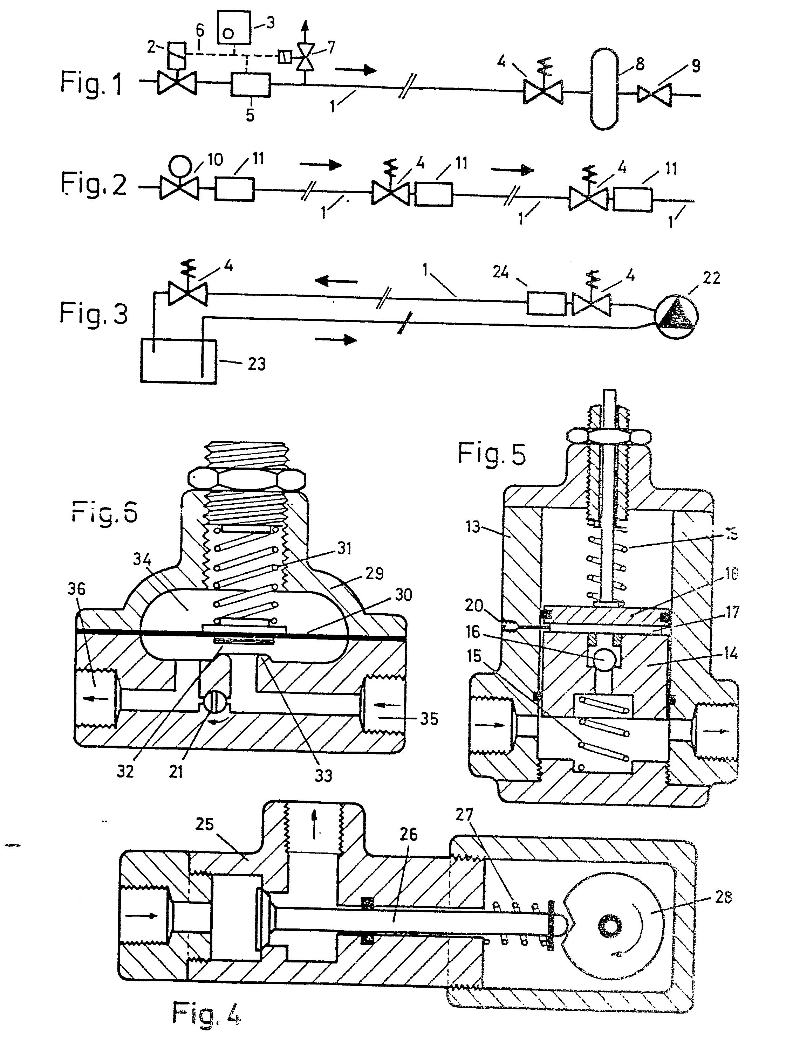

Gemäss Fig.1 ist eingangs der Leitung 1 als Intervalldurchfluss-Vorrichtung das Elektroventil 2 eingebaut, welches durch den Timer 3 gesteuert wird. Es wird damit ein steter Wechsel zwischen Strömung und Stillstand erreicht, der, wie später noch beschrieben wird, weitgehend veränderbar ist. Durch das Druckhalteventil 4 - z.B. ein Überströmventil - am Ausgang der zu überwachenden Leitungsstrecke wird in den intervallmässigen Stillstandsphasen ein einstellbarer Minimaldruck in der Leitung 1 aufrechterhalten. Sinkt er während einer Stillstandphase unter den vorgesehenen Minimalwert ab, was praktisch nur bei einem entstandenen Leck möglich ist, so spricht der als Druckkontrollvorrichtung vorgesehene Pressostat 5 an und unterbricht über die Wirkleitung 6 den Stromkreis für das Elektroventil 2, welches in der Folge geschlossen bleibt und so die sofortige Sperrung eines weiteren Durchflusses bewirkt, bis das Leck gefunden und beseitigt ist. Die Sperrung der Leitung kann auch mit der Auslösung eines optischen oder akustischen Alarmsignals kombiniert sein. Die Leitung 1 kann erst durch eine Überbrückung des Pressostatkontaktes wieder in Betrieb gesetzt werden.

Um ein unnötiges weiteres Ausströmen des Leitungsinhalts durch das Leck zu verhindern, kann es inbesondere bei gasförmigen Medien vorteilhaft sein, das mit der Leitung 1 in Verbindung stehende Auslassventil 7 vorzusehen, das gleichfalls vom Pressostat 5 über die Wirkleitung 6 geöffnet wird. Die Leitung wird damit druckentlastet. Das ausströmende Medium kann abgefangen und wieder verwertet werden.

Ist das entstandene Leck nur klein, so braucht es dementsprechend lange, bis sich ein merklicher Druckabfall zeigt, der bei einer nur kurzzeitigen Prüfung kaum festgestellt werden kann. Sollen auch kleinste Leckagen rechtzeitig ermittelt werden, bevor grösserer Schaden entsteht, so ist es zweckmässig, den Timer durch einen Zeitschalter zu übersteuern, um für eine längere Zeitspanne das Elektroventil geschlossen zu halten. Zeigt sich bei dieser Feinprüfung ein Druckabfall, so tritt der Pressostat 5 wie beschrieben in Funktion.

Für die normale Überwachung kann beispielsweise eine Frequenz der Intervalle von 150 sec gewählt werden, unterteilt in 120 sec Förderphase und 30 sec Stillstandsphase. - Für die Feinprüfung genügt eine Frequenz von z.B. 6 Stunden, unterteilt in $5^h30$ min Förderphase und 30 min Stillstandsphase.

Wenn die erzeugte Intervallströmung irgendwelche Leitungsfunktionen stören sollte, kann dem Druckhalteventil 4, in Strömungsrichtung gesehen, das Druckausgleichsgefäss 8 nachgeschaltet werden, welches nötigenfalls mit dem Druckreduzierventil kombiniert wird, womit eine gleichmässige Strömung wieder hergestellt ist.

Nach Fig.2 ist die Leitung 1 in Abschnitte unterteilt, von denen jeder für sich abgesichert ist. Als Intervalldurchfluss-Vorrichtung dient das mechanische Ventil 10, das motorisch, gegebenenfalls auch auf eine andere Art, betätigt wird. Am Anfang jedes Leitungsabschnittes ist ein Druckkontrollventil 11 angeordnet, das auch als Absperrventil gestaltet ist. Am Ende jedes Leitungsabschnittes ist ein Druckhalteventil 4 vorgesehen. Beim Auftreten eines Lecks wird der betreffende Abschnitt durch die Teile 4 und 11 von beiden Seiten her abgesperrt, da das Druckhalteventil 4 auch als Rückschlagventil wirkt. Die neuerliche Inbetriebnahme erfolgt durch Wiederherstellung des freien Durchflusses durch das Druckkontrollventil.

In der Praxis besteht oftmals ein bereits betriebsbedingter Intervallbetrieb, beispielsweise bei einer Ölfeuerungsanlage, Fig.3. Da die Rücklaufleitung 1 zwischen
Ölbrenner 22 und Öltank 23 nicht unterbrochen werden
darf, wird ein zweites Druckhalteventil 4 nach dem Brenner angeordnet. Da dieses, wie bereits gesagt, auch als
Rückschlagventil wirkt, bleibt während der Stillstandsphase der eingestellte Minimaldruck erhalten. Der Druckschalter 24 unterbricht bei einem leckbedingten Druckabfall die Stromzuführung zum Brenner. Die Anlage kann
erst durch Überbrücken des Druckschalterkontaktes wieder
in Betrieb gesetzt werden.

Die erfindungsgemässe Einrichtung kann auch für ein Leitungsnetz angewandt werden, indem dasselbe als eine Einheit insgesamt oder unterteilt in eine beliebige Anzahl
von Leitungsabschnitten überwacht wird. Zu diesem Zwecke
muss vor jeder Zapfstelle ein Druckhalteventil eingebaut
werden, damit bei einem Öffnen derselben der eingestellte
Minimaldruck nicht unterschritten wird, was sonst zu einer Vortäuschung einer Leckstelle führen würde.

Eine Ausführungsform eines als Intervalldurchfluss-Vorrichtung dienenden mechanischen Ventils (10 in Fig.2)
zeigt die Fig.4. In das mehrteilige Gehäuse 25 ist das
Tellerventil 26 eingebaut, welches von der Schraubenfeder
27 auf seinen Sitz gepresst wird. In dieser Stellung ist
der Durchfluss des Ventils gesperrt. Es wird von der mechanisch angetriebenen Kurvenscheibe 28 gesteuert. Durch
eine entsprechende Gestaltung der Steuerkurve der Scheibe
28 kann ein langsames Öffnen und Schliessen des Ventils
erzielt werden, um Druckschläge auf die Leitung innerhalb
eines Intervalls zu vermeiden. Zusätzlich kann die Frequenz der Intervalle, welche von der Drehzahl der Kurvenscheibe 28 abhängt, sowie das Verhältnis: Öffnungszeit/
Schliesszeit des Ventils individuell verändert werden.

In den Fig.5 und 6 sind Druckkontrollventile dargestellt,
die gleichzeit als Absperrventile ausgebildet sind (11 in Fig.2). Nach Fig.5 ist im mehrteiligen Gehäuse 13 der Arbeitskolben 14 dichtend verschiebbar eingebaut. Durch die Schraubenfeder 15 wird er in einer angehobenen Stellung gehalten, womit der Durchfluss durch das Ventil freigegeben ist. Bei Druckaufbau in der Leitung strömt eine kleine Menge des Mediums durch das Rückschlagventil 16 in den Speicherraum 17 und hebt den Speicherkolben 18, auf den von der Gegenseite die Kraft der verstellbaren Schraubenfeder 19 wirkt. Bei Druckabfall bewegt die Feder 19 den Arbeitskolben 14 nach unten, was die Sperrung des weiteren Durchflusses bewirkt. Zur Entriegelung des Ventils wird die Bohrung 20 freigegeben, der Speicherraum 17 wird druckentlastet und der Arbeitskolben 14 kehrt unter Einwirkung der Feder 19 in seine Anfangsstellung zurück.

Nach Fig.6 ist zwischen den beiden Teilen des Gehäuses 29 die Membrane 30 eingespannt, welche den Hohlraum 34 des Gehäuses unterteilt. Die Membrane trägt den Ventilteller 32, der bei Druckentlastung von der Schraubenfeder 31 auf den Ventilsitz 33 gedrückt wird; damit ist der Durchfluss durch das Ventil gesperrt. Innerhalb des Ventilsitzes mündet die Zulaufleitung 35 für das Medium aus. Auf der selben Seite der Membrane mündet die Ablaufleitung 36 ein. Zu- und Ablaufleitung sind über das Bypassventil 21 miteinander verbunden.

Auch bei vollem Förderdruck ist die auf den Ventilteller 32 wirkende Druckkraft nicht gross genug, um ihn vom Ventilsitz 33 abzuheben. Erst nach Freigabe des Strömungsweges durch das Bypassventil 21 baut sich in der Ablaufleitung 36 sowie im Hohlraum um den Ventilteller 32 herum ein Druck auf. Sobald dieser auf die Membrane 30 wirkende Druck gross genug ist, um entgegen der Kraft der Feder 31 den Ventilteller von seinem Sitze abzuheben, bleibt das Ventil offen und der Durchfluss kann beginnen. Die Betriebsstellung ist erreicht und das Bypassventil wird wieder geschlossen. Bei sinkendem Förderdruck schliesst die Federkraft das Ventil wieder.

Patentansprüche:

1. Lecksicherungsverfahren zur Überwachung einer Rohrleitung, die ein flüssiges oder gasförmiges Medium führt, dadurch gekennzeichnet, dass die Förderung des Mediums durch die Rohrleitung (1) pulsierend erfolgt und bei einem leckbedingten Druckabfall, welcher zur Unterschreitung eines einstellbaren Minimaldruckes in der Leitung (1) während einer der intervallmässig immer wiederkehrenden Stillstandsphasen führt, der Durchfluss durch die Leitung (1) sofort gesperrt wird.

2. Lecksicherungsverfahren nach Anspruch 1, dadurch gekennzeichnet, dass gleichzeitig mit der Sperrung des Durchflusses durch die Leitung (1) eine Druckentlastung derselben eingeleitet wird.

3. Lecksicherungsverfahren nach Anspruch 1, dadurch gekennzeichnet, dass in grösseren Zeitabständen eine längere Stillstandsphase zur Feinprüfung der Leitung (1) auf einen eventuell eintretenden Druckabfall eingeschaltet wird.

4. Einrichtung zur Durchführung des Verfahrens nach Anspruch 1, gekennzeichnet durch eine eingangs der zu überwachenden Rohrleitung (1) eingebaute Intervalldurchfluss-Vorrichtung (2, 10), welche eine pulsierende Strömung durch die Leitung (1) bewirkt, durch ein ausgangs der Leitung (1) angeordnetes Druckhalteventil (4), welches einen einstellbaren Minimaldruck in der intakten Leitung (1) gewährleistet, und durch eine Druckkontrollvorrichtung (5,11,24), welche bei Unterschreitung des eingestellten Minimaldruckes eine Sperrung des Durchflusses der Leitung (1) bewirkt.

5. Einrichtung nach Anspruch 4, dadurch gekennzeichnet, dass die Intervalldurchfluss-Vorrichtung aus einem durch einen Timer (3) gesteuerten Elektroventil (2) besteht.

6. Einrichtung nach Anspruch 4, dadurch gekennzeichnet, dass die Intervalldurchfluss-Vorrichtung aus einem zwangsgesteuerten mechanischen Ventil (10) besteht.

7. Einrichtung nach Anspruch 4, dadurch gekennzeichnet, dass die Druckkontrollvorrichtung aus einem Pressostaten (5) besteht.

8. Einrichtung nach Anspruch 4, dadurch gekennzeichnet, dass die Druckkontrollvorrichtung aus einem hydraulisch oder pneumatisch arbeitenden Kolben- oder Membranventil (11) besteht, das auch als Absperrventil ausgebildet ist.

9. Einrichtung nach Anspruch 4, dadurch gekennzeichnet, dass zur Wiederherstellung einer gleichmässigen Strömung dem Druckhalteventil (4), in Strömungsrichtung gesehen, ein Druckausgleichsgefäss (8) nachgeschaltet ist.

10. Einrichtung nach Anspruch 4, dadurch gekennzeichnet, dass das Druckhalteventil (4) elektrisch angesteuert ist.

11. Einrichtung nach Anspruch 4, dadurch gekennzeichnet, dass die Druckkontrollvorrichtung (5,11,24) bei Unterschreitung des eingestellten Minimaldruckes zusätzlich ein Öffnen eines mit der Rohrleitung (1) in Verbindung stehenden Auslassventils (7) bewirkt.

0011329

Fig. 1

Fig. 2

Fig. 3

Fig. 6

Fig. 5

Fig. 4

## Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| A | <u>DE - A - 2 158 901</u> (HABEMA) <br> * Seite 4 bis Seite 6, Absatz 1; Figur 1 * | |
| | -- | |
| A | <u>DE - A - 2 623 509</u> (FIEDLER) <br> * Seite 4, letzter Absatz bis Seite 5, letzter Absatz; Figuren 1-3 * | |
| | -- | |
| A | <u>US - A - 3 692 050</u> (DETERS) <br> * Spalte 2, Zeile 24 bis Spalte 4, Zeile 35; Figuren * | |
| | -- | |
| A | <u>US - A - 3 722 520</u> (GLEDHILL) <br> * Spalte 3, Zeile 35 bis Spalte 4, Zeile 54; Figuren 1,2 * | |
| | -- | |
| A | <u>CH - A - 244 944</u> (MERKER) <br> * Seite 2, Zeile 20 bis Seite 3, Zeile 17; Figuren 1-4 * | |
| | ---- | |

**KLASSIFIKATION DER ANMELDUNG (Int.Cl. 3)**

F 17 D 5/02
G 01 M 3/28
F 23 K 5/00

**RECHERCHIERTE SACHGEBIETE (Int. Cl. 3)**

F 16 K
F 16 L
G 01 M
F 23 K
F 17 D

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 08-02-1980 | V. REETH |

EPA form 1503.1 06.78